# EUROPÄISCHE PATENTANMELDUNG

(11) **EP 4 417 512 A2**
(43) Veröffentlichungstag der Anmeldung: **21.08.2024**
(21) Anmeldenummer: 24156835.1
(22) Anmeldetag: 09.02.2024
(51) Int. Cl.: B64C 29/00, B64D 27/31, B64D 33/08, B64D 33/10, B64D 27/30, B64D 27/40

(54) **ANTRIEBSVORRICHTUNG UND EIN SENKRECHT-START- UND -LANDUNGSLUFTFAHRZEUG MIT ANTRIEBSVORRICHTUNG**

(30) Priorität: 15.02.2023 DE 102023103681
(71) Anmelder: Rolls-Royce Deutschland Ltd & Co KG, 15827 Blankenfelde-Mahlow (DE)
(72) Erfinder: MANIG, Matthias, 15827 Blankenfelde-Mahlow (DE); RUDENKO, Anton, 15827 Blankenfelde-Mahlow (DE)

(57) **Zusammenfassung**

Die Erfindung betrifft eine Antriebsvorrichtung (1) mit einem elektrischen Antrieb (2), die mit einer Flugzeugstruktur (10) eines Senkrecht-Start- und - Landungsluftfahrzeugs verbunden ist, gekennzeichnet durch eine Strebenvorrichtung (3), die den elektrischen Antrieb (2) mit der Flugzeugstruktur (10) verbindet und der elektrische Antrieb (2) mittels einer Verschwenkvorrichtung (11) um eine Schwenkachse (S) relativ zur Flugzeugstruktur (10) verschwenkbar ausgebildet ist und mindestens eine Anlenkungsvorrichtung (A) der Verschwenkvorrichtung (11) an der Flugzeugstruktur (10) angeordnet ist.

## Beschreibung

Die Erfindung betrifft eine Antriebsvorrichtung mit den Merkmalen des Anspruchs 1 und ein Senkrecht-Start- und -Landungsluftfahrzeug mit den Merkmalen des Anspruchs 12.

Luftfahrzeuge, die senkrecht starten und landen können (im Englischen: VTOL: *vertical take off and landing*), sind grundsätzlich bekannt. Wird als Antriebsvorrichtung eines solchen Luftfahrzeuges ein elektrischer Antrieb verwendet, so wird dieses auch als eVTOL Luftfahrzeug bezeichnet. Gerade für den Einsatz von Luftfahrzeugen im städtischen Bereich (im Englischen: UAM: *urban air mobility*) sind solche Luftfahrzeuge von erheblichem Interesse.

Dabei kommen grundsätzlich unterschiedliche Bauformen zum Einsatz, wie z.B. reine Drehflügler oder Bauformen mit schwenkbaren Tragflächen oder schwenkbaren Antrieben.

Bei einer Ausführung mit verschwenkbaren Antrieben werden diese von einer Auftriebsposition in eine Vortriebsposition gebracht. Die elektrischen Antriebe sind dabei über eine Antriebsvorrichtung mit einer Tragfläche verbunden, wobei die Verschwenkung um eine Achse am oder im Gehäuse der Antriebsvorrichtung erfolgt.

Es besteht die Aufgabe, verbesserte Vorrichtungen zu schaffen, die insbesondere eine effiziente Kühlung der elektrischen Antriebe erlauben.

Die Aufgabe wird durch eine Antriebsvorrichtung mit den Merkmalen des Anspruchs 1 gelöst.

Eine Strebenvorrichtung ist mit einem elektrischen Antrieb und mit der Flugzeugstruktur verbunden Eine Strebe ist ein häufig diagonal verlaufendes Bauteil, dass vorwiegend Druck- und Zugkräfte aufnehmen kann. Eine Strebenvorrichtung erlaubt insbesondere eine gewichtssparende Ausführung, da Kräfte gezielt aufgenommen und insbesondere in die Antriebsvorrichtung abgeführt werden können.

Der elektrische Antrieb kann mittels einer Verschwenkvorrichtung um eine Schwenkachse relativ zur Flugzeugstruktur verschwenkt werden, wobei mindestens eine Anlenkungsvorrichtung der Verschwenkvorrichtung an der Flugzeugstruktur angeordnet ist, Die Strebenstruktur mit der elektrischen Antriebsvorrichtung kann somit durch die Verschwenkung von einer Position für den Vorwärtsflug in den Vertikalflug (und umgekehrt) gebracht werden.

Für eine stabile und effiziente Verschwenkung ist die mindestens eine Anlenkungsvorrichtung oberhalb einer axialen, horizontalen Mittelebene der Antriebsvorrichtung angeordnet, d.h. die Verschwenkung erfolgt nicht von der Unterseite der Antriebsvorrichtung.

Dabei kann die mindestens eine Anlenkungsvorrichtung in horizontaler Flugrichtung einen Versatz gegenüber der Strebenstruktur nach hinten aufweisen, wobei der Versatz mindestens einem Durchmesser der Strebenstruktur entspricht. Der Versatz bewirkt einen Abstand, der ein Verschwenken der Strebenstruktur ermöglicht, ohne dass diese mit der Antriebsvorrichtung kollidiert.

Die Kühlung des elektrischen Antriebs ist von besonderer Bedeutung, so dass in einer Ausführungsform mindestens ein Kühlluftkanal Kühlluft zur Rückseite des elektrischen Antriebs führt. Auch kann an der Strebenvorrichtung mindestens eine elektrische Umrichtereinheit angeordnet sein, insbesondere mit einer Wärmeaustauschfläche zu dem mindestens einem Kühlluftkanal, der mit einem Kühllufteinlauf der Strebenstruktur verbunden ist.

In einer Ausführungsform geht die Schwenkachse für den mindestens einen Teil der Strebenvorrichtung durch zwei Punkte der Flugzeugstruktur. Auch kann zusätzlich oder alternativ die Schwenkachse im Inneren der Antriebsvorrichtung liegen, insbesondere in der axialen, horizontalen Mittelebene der Antriebsvorrichtung.

In einer Ausführungsform kann die Verschwenkvorrichtung ein Hebelgetriebe, insbesondere ein hydraulisch, elektrisch oder pneumatisch angetriebenes Hebelgetriebe aufweisen.

In einer Ausführungsform ist die Verschwenkvorrichtung über eine Gelenkhebelvorrichtung mit der Strebenstruktur verbunden. Auf diese Weise kann z.B. der Aktuator aus einem Lastpfad genommen werden, der von der Antriebsvorrichtung über die Strebenvorrichtung zur Flugzeugstruktur verläuft.

Die elektrische Antriebsvorrichtung kann als Transversalflussmaschine ausgebildet sein oder eine Transversalflussmaschine aufweisen.

Im Zusammenhang mit den in den Figuren dargestellten Ausführungsbeispielen wird die Erfindung erläutert. Dabei zeigt
- Figur 1: eine schematische Darstellung einer ersten Ausführungsform einer ersten Antriebsvorrichtung in einer Seitenansicht;
- Figur 2: eine schematische Darstellung der ersten Ausführungsform in einer Draufsicht;
- Figur 3: eine schematische Darstellung einer zweiten Ausführungsform der Antriebsvorrichtung in einer Ansicht von der Seite;
- Figur 4: eine schematische Darstellung der zweiten Ausführungsform gemäß Fig. 3 in einer Draufsicht;
- Figur 5: eine schematische Darstellung einer dritten Ausführungsform der Antriebsvorrichtung in einer Seitenansicht;
- Figur 6: eine schematische Darstellung einer vierten Ausführungsform der Antriebsvorrichtung in einer Seitenansicht;

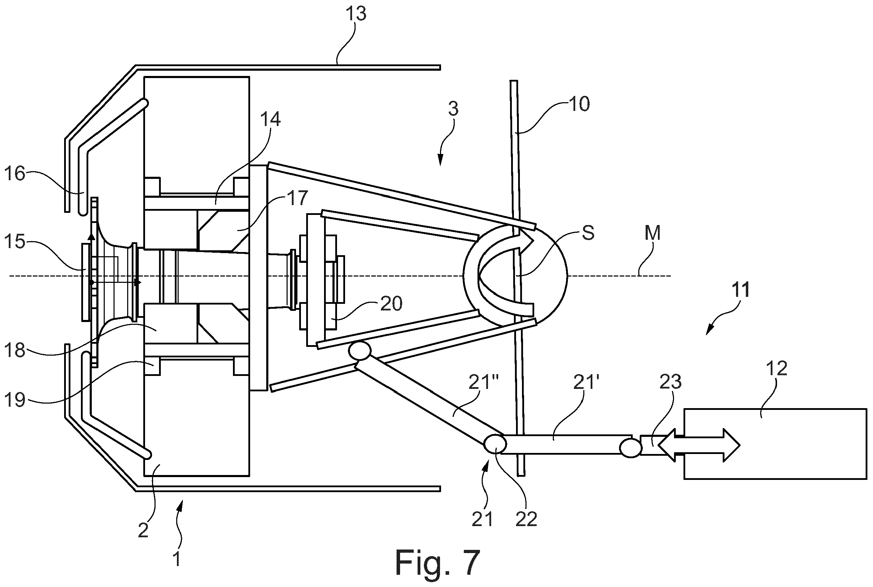

- Figur 7: eine schematische Darstellung einer fünften Ausführungsform der Antriebsvorrichtung in einer Seitenansicht.

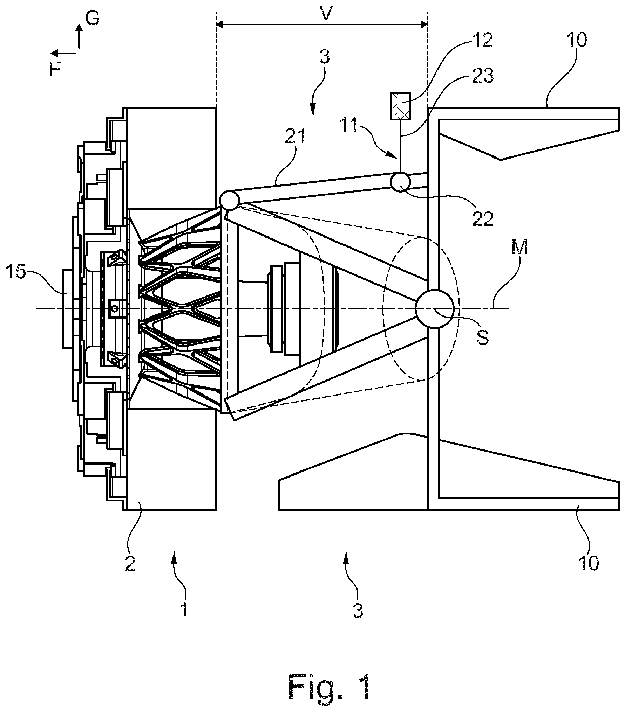

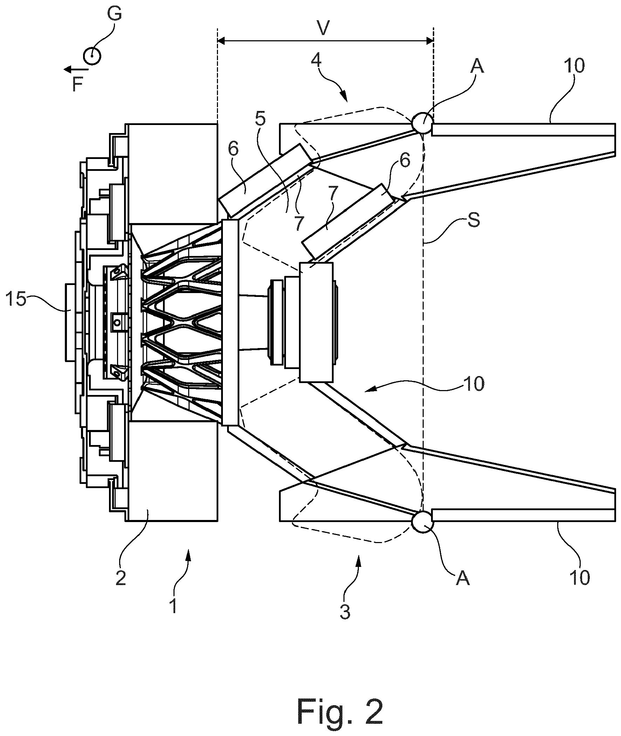

Fig. 1 und Fig. 2 zeigen in schematischen Darstellungen jeweils eine Antriebsvorrichtung 1 mit einem elektrischen Antrieb 2, die über eine Strebenstruktur 3 mit einer Flugzeugstruktur 10 gekoppelt ist. Die Flugzeugstruktur 10 kann z.B. eine feste Struktur an oder innerhalb eines Flugzeugteils sein, wobei das Flugzeugteil aus Gründen der Übersichtlichkeit hier nicht dargestellt ist. Der elektrische Antrieb 2 treibt einen hier ebenfalls nicht dargestellten Propeller über eine Antriebswelle 15 an.

Der elektrische Antrieb 2 ist hierfür ein Senkrecht-Start- und -Landungsluftfahrzeug ausgebildet, wie z.B. einem UAM (urban air mobility) Luftfahrzeug. Dabei kann der elektrische Antrieb 2 eine Transversalflussmaschine aufweisen.

In den Darstellungen der Fig. 1 und 2 sind die Strebenstruktur 3 und die Antriebsvorrichtung 1 in horizontaler Flugrichtung F gesehen vor der Flugzeugstruktur 10 angeordnet.

Die Ansicht der Fig. 1 ist dabei so gewählt, dass von der Seite auf die Antriebsvorrichtung 1 und die Strebenstruktur 3 geblickt wird. Die Ansicht der Fig. 2 zeigt eine entsprechende Draufsicht, d.h. die Antriebsvorrichtung 1 ist links von der Strebenstruktur 3 angeordnet.

Die Antriebsvorrichtung 1 ist über die Strebenstruktur 3 und die Flugzeugstruktur 10 mit einem Senkrecht-Start- und -Landungsluftfahrzeug verbunden, zum Beispiel über eine Tragfläche. Aus Gründen der Übersichtlichkeit ist die Anbindung an das Senkrecht-Start- und -Landungsluftfahrzeug in den Fig. 1 und 2 nicht dargestellt. Auch sind Wandungen, die die Antriebsvorrichtung 1 und andere Bauteile umgeben in den Fig. 1 und 2 aus Gründen der Übersichtlichkeit nicht dargestellt.

Bei einem Senkrecht-Start- und -Landungsluftfahrzeug kann die Position der Antriebsvorrichtung 1 je nach Flugrichtung relativ zur Flugzeugstruktur 10 geändert werden. Für den Flug in Vorwärtsrichtung F (d.h. in der Horizontalen) ist der Propeller so ausgerichtet, dass Luft nach hinten beschleunigt wird. Diese Position ist in den Fig. 1 und 2 dargestellt.

Für den Flug in Vertikalrichtung G wird die Strebenstruktur 3 zusammen mit der Antriebsvorrichtung 1 und dem Propeller in die Vertikalrichtung G verschwenkt, so dass die Luft nach unten beschleunigt wird.

Bei der Darstellung in der Fig. 1 erfolgt die Verschwenkung der Antriebsvorrichtung 1 im Uhrzeigersinn nach rechts Bei der Darstellung in Fig. 2 würde eine solche Verschwenkung aus der Zeichnungsebene hinausführen.

In der Fig. 1 ist ein Teil einer Verschwenkvorrichtung 11 dargestellt, mit der die Strebenstruktur 3 um eine Schwenkachse S relativ zur Flugzeugstruktur 10 verschwenkt werden kann. In der Fig. 2 ist die Schwenkachse S sichtbar, die in zwei Punkten die Flugzeugstruktur 10 schneidet. In der Fig. 1 verläuft die Schwenkachse S senkrecht in die Zeichnungsebene hinein.

Ein Aktuator 12 (z.B. ein Hydraulikzylinder, ein elektrischer Antrieb, ein pneumatischer Antrieb) ist hier über ein Verstellelement 23 mit einem Hebelarm einer Gelenkhebelvorrichtung 22 gekoppelt, um die Strebenstruktur 3 zwischen der Vorwärtsflugstellung F und der Vertikalflugstellung G zu verstellen.

Die Verschwenkvorrichtung 11 ist dabei mit einer Anlenkungsvorrichtung A (z.B. eine ortsfeste Verbindung, also einem Anlenkungspunkt) verbunden, die an der Flugzeugstruktur 10 angeordnet ist.

Bei der schematischen Darstellung der Fig. 1 kann das Verstellelement 23 des Aktuators 12 z.B. eine Bewegung nach unten ausführen, so dass durch die Hebelwirkung ein Verschwenken der Strebenvorrichtung 3 im Uhrzeigersinn erfolgt, so dass die Strebenstruktur 3 nach oben in die Vertikalflugstellung G gebracht werden kann.

In der dargestellten Ausführungsform weist die Anlenkungsvorrichtung A in horizontaler Flugrichtung F einen Versatz V gegenüber der Antriebsvorrichtung 1 nach hinten auf. Der Versatz V kann dabei - gemessen von der Frontseite der Strebenstruktur 3 - mindestens dem Durchmesser der Strebenstruktur 3 entsprechen, damit die relative Verschwenkung der Strebenstruktur 3 möglich ist, ohne dass die Flugzeugstruktur 10 berührt wird.

Für eine effiziente Verschwenkung der Strebenstruktur 3 zwischen den Flugrichtungen F, G ist die Anlenkungsvorrichtung A oberhalb einer axialen, horizontalen Mittelebene M (siehe Fig. 1) der Antriebsvorrichtung 1 angeordnet. Damit wird die Bewegung der Strebenstruktur 3 von oben und nicht von unten bewirkt.

In der dargestellten Ausführungsform liegt die Schwenkachse S dabei im Inneren, insbesondere in der axialen, horizontalen Mittelebene M der Antriebsvorrichtung 1 (siehe Fig. 2). In anderen Ausführungsformen kann sie auch oberhalb der axialen, horizontalen Mittelebene M liegen.

Eine Strebenstruktur 3 weist in an sich bekannter Weise Einlassstutzen (hier nicht dargestellt) für Kühlluft auf, die aus der Umgebung aufgenommen wird. In der Darstellung der Fig. 2 ist erkennbar, dass jeweils seitlich der Strebenstruktur 3 Kühllufteinläufe 4 vorhanden sind, von denen Kühlluftkanäle 5 in das Innere der Strebenstruktur 3 geführt werden. Die Kühlluft wird durch die hier nicht dargestellten Einlaufstutzen im Horizontalflug F von vorne aufgenommen und dann über die bogenförmigen Kühlluftkanäle 5 auf die Rückseite des elektrischen Antriebs 2 geführt. Die Kühlung des elektrischen Antriebs 2 ist dabei für die Betriebssicherheit und die Lebensdauer von großer Bedeutung.

Ein Teil des elektrischen Antriebs 2 sind dabei elektrische Umrichtereinheiten 6, die ebenfalls gekühlt werden müssen. Dazu sind diese an der Strebenstruktur 3 in der Nähe der Kühlluftkanäle 5 angeordnet. Auch ist es möglich, dass die Umrichtereinheiten 6 eine Wärmeaustauschfläche 7 zu den Kühlluftkanälen 5 haben (siehe Fig. 2).

In der Folge werden weitere Ausführungsformen dargestellt, die auf den zuvor dargestellten Prinzipien beruhen, so dass jeweils auf die obige Darstellung zurückgegriffen werden kann.

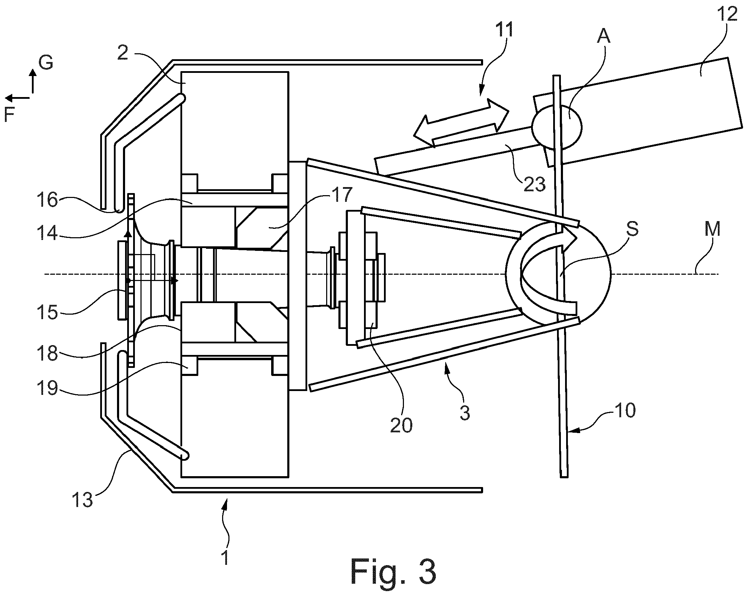

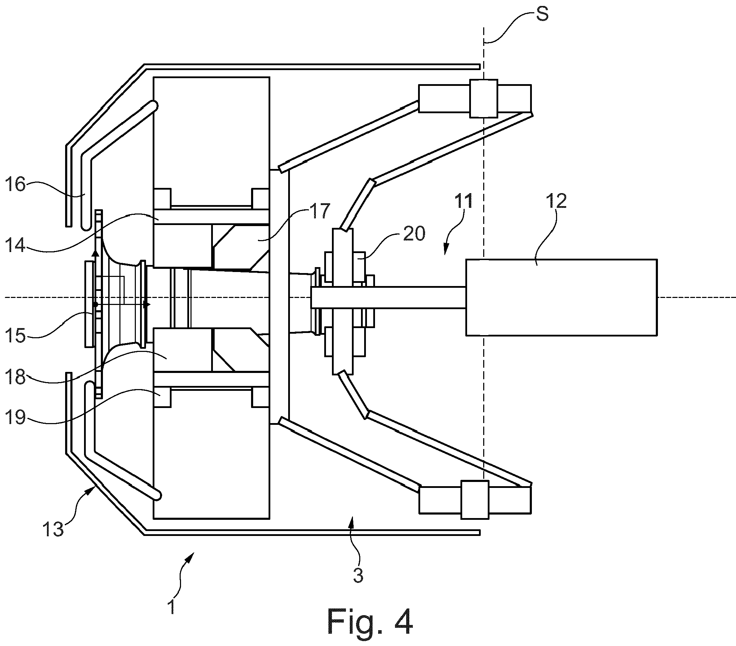

Figur 3 zeigt in einer Seitenansicht die zweite Ausführungsform der Antriebsvorrichtung 1 mit der Strebenstruktur 3 und der Flugzeugstruktur 10. In Figur 4 ist diese Ausführungsform in einer Draufsicht dargestellt. Dabei sind vor allem im Zusammenhang mit der Antriebseinheit 10 noch weitere Details dargestellt.

So ist hier eine Pylonstruktur 13 dargestellt, die Teil der Antriebsstruktur 1 ist und insbesondere den elektrischen Antrieb 2 und teilweise auch die Strebenstruktur 3 umgibt. Der elektrische Antrieb 2 ist hier um die Drehachse der Antriebswelle 15 für den hier nicht dargestellten Propeller herum angeordnet, wobei eine Motorstruktur 14 den statischen Teil des elektrischen Antriebs 2 mit dem Rest der Antriebsvorrichtung 1 und der Strebenstruktur 3 verbindet.

Der rotierbare, radial äußere Teil des elektrischen Antriebs 2 ist über ein Verbindungsmittel 16 mit der Antriebswelle 15 verbunden, die so in Rotation versetzt werden kann.

Die Antriebswelle 15 ist axial vorne über eine erste Lagervorrichtung 18 gegenüber den statischen Teilen der Antriebsvorrichtung 1 gelagert, wobei eine Stützstruktur 17 die erste Lagervorrichtung 18 axial gegenüber nicht rotierenden Teilen festlegt.

Der rotierende Teil des elektrischen Antriebs 2 ist über eine zweite Lagervorrichtung 19 gegenüber der Motorstruktur 14 gelagert.

Die Antriebswelle 15 ist axial hinten über eine dritte Lagervorrichtung 20 gegenüber der Strebenstruktur 3 gelagert.

Zum Verschwenken des elektrischen Antriebs 2 ist dieser über die Strebenstruktur 3 mit dem Aktuator 12 gekoppelt (siehe Figur 3). Der Aktuator 12 ist hier über eine Anlenkungsvorrichtung A mit der Flugzeugstruktur 10 verschwenkbar verbunden, aber ansonsten fest verbunden. Das bewegliche Teil des Aktuators 12, das Verstellelement 23, ist mit der Strebenstruktur 3 verbunden. Die Strebenstruktur 3 ist - wie bei der ersten Ausführungsform - drehbar an der festen Flugzeugstruktur 10 verbunden.

Wenn das Verstellelement 23 linear nach rechts eingefahren wird, so wird die Strebenstruktur 3 um die Schwenkachse S herum im Uhrzeigersinn gedreht; d.h. der elektrische Antrieb 2 mit der Antriebswelle 15 wird in die Vertikale verschwenkt. In der Darstellung der Figur 4 entspricht diese Verschwenkung einer Verschwenkung aus der Zeichnungsebene hinaus.

Wenn der Aktuator 12 linear nach links ausgefahren wird, so wird die Strebenstruktur 3 um die Schwenkachse S herum entgegen dem Uhrzeigersinn gedreht, d.h. der elektrische Antrieb 2 mit der Antriebswelle 15 wird in die Horizontale verschwenkt. In der Darstellung der Figur 4 entspricht diese Verschwenkung einer Verschwenkung in die Zeichnungsebene hinein.

In der Darstellung der Figur 4 ist erkennbar, dass die Anlenkungsvorrichtung A, der Aktuator 12 in der Ebene der Drehachse der Antriebswelle 15 angeordnet sind, d.h. sie sind mittig an der Flugzeugstruktur 10 angeordnet.

Grundsätzlich wird man bestrebt sein, die Kräfte auf den Aktuator 12 und die Verschwenkvorrichtung 11 in der Vertikalstellung zu minimieren. Die Schwenkachse S ist hier in der axialen Mittelebene M angeordnet (siehe Figur 3). Sie kann aber auch darüber oder darunter angeordnet sein. Dabei ist es auch möglich, dass die Anlenkungsvorrichtung A seitlich (im Sinne der Figur 4) verschoben angeordnet sein kann.

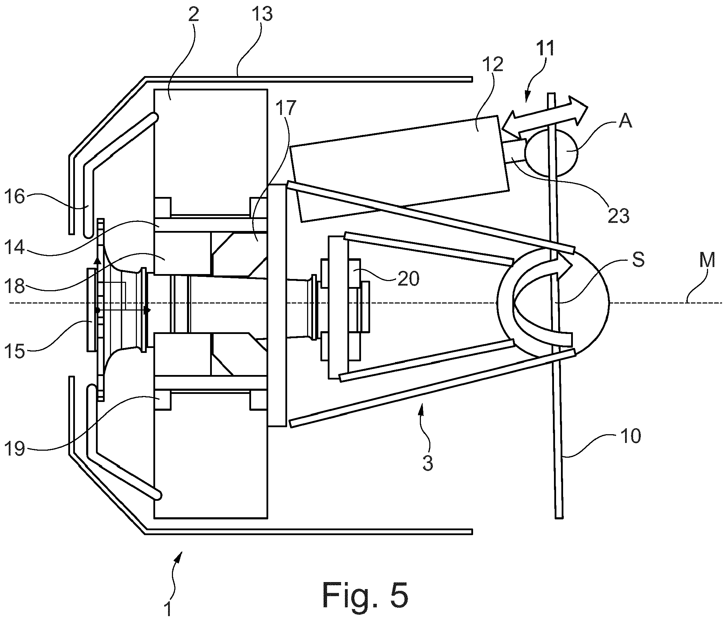

In der Figur 5 ist als dritte Ausführungsform eine Variante der zweiten Ausführungsform dargestellt, wobei hier analog zur Figur 3 eine Seitenansicht dargestellt ist. Die Funktion der dritten Ausführungsform entspricht dabei der zweiten, so dass auf die entsprechende Beschreibung Bezug genommen werden kann.

Allerdings ist die Wirkweise des Aktuators 12 invertiert, d.h. die Verschwenkvorrichtung 11 ist mit der Anlenkungsvorrichtung A an der Flugzeugstruktur 10 gekoppelt. Der Aktuator 12 hingegen ist mit der Strebenvorrichtung 3 gekoppelt. Ein Einfahren des Verstellelementes 23 von der Flugzeugstruktur 10 weg resultiert in einer Verschwenkung im Uhrzeigersinn nach oben. Neben den mechanischen Lasten der Verstellung nimmt der Aktuator 12 hier auch Lasten aus dem Flugbetrieb auf (aerodynamische Lasten).

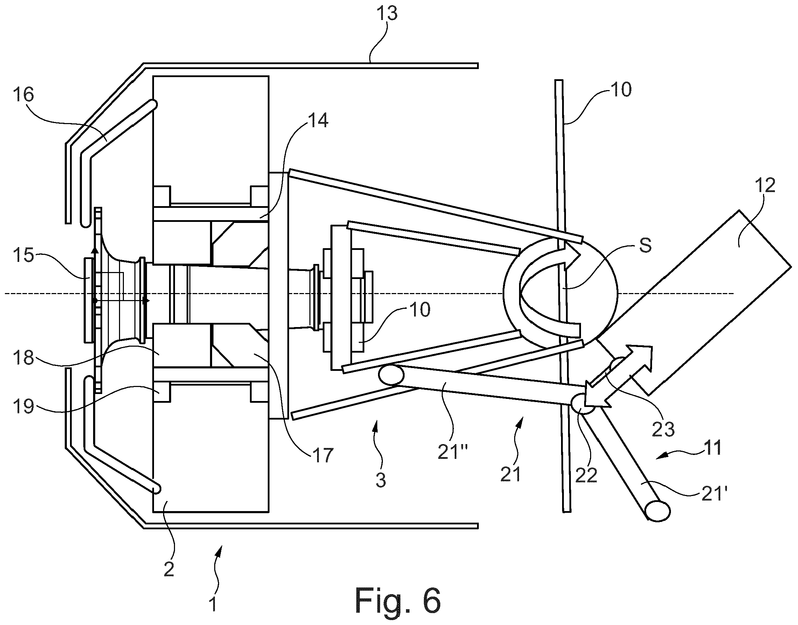

In Figur 6 ist eine vierte Ausführungsform dargestellt, die sich durch die Anordnung und Ausbildung der Verschwenkvorrichtung 11 und des Aktuators 12 von den zuvor beschrieben Ausführungsformen unterscheidet.

Hier wirken Aktuator 12 und Verschwenkvorrichtung 11 über eine Gelenkhebelvorrichtung 21 auf die Strebenstruktur 3.

Die Gelenkhebelstruktur 21 weist in der dargestellten Ausführungsform zwei Hebelelemente auf. Das erste Hebelelement 21' ist schwenkbar, aber ansonsten fest mit der Flugzeugstruktur 10 verbunden. Das zweite Hebelelement 21" ist schwenkbar, aber fest mit der Strebenstruktur 3 verbunden. An dem Verbindungelenk 22 der beiden Hebelelemente 21', 21" greift das Verstellelement 23 des Aktuators 12 an.

Der Aktuator 12 kann bei dieser Bauweise weiter im Inneren angeordnet sein (hier axial weiter hinten), wobei die räumliche Anordnung durch die Zwischenschaltung der Gelenkhebelstruktur 21 flexibler gestaltet werden kann, um z.B. auf räumliche Beschränkungen Rücksicht zu nehmen.

Wenn das Verstellelement 23 in der dargestellten Ausführungsform in Richtung vom Aktuator 12 wegbewegt wird, so wird der Angriffspunkt am Verbindungsgelenk 22 nach unten gedrückt, so dass sich der Winkel zwischen den Hebelelementen 21', 22' vergrößert. Dadurch setzt eine Verschwenkung der Strebenstruktur 3 im Uhrzeigersinn ein, so dass der elektrische Antrieb in die Vertikale bewegt wird.

Umgekehrt führt ein Einfahren des Verstellelementes 23 aus dem Aktuator 12 zu einer Verschwenkung in die entgegengesetzte Richtung.

Die Gelenkhebelstruktur 21 hat hier den Vorteil, dass der Aktuator 12 und die Verschwenkvorrichtung 11 nicht unmittelbar im Lastpfad liegen, da die Flug-Lasten über die Gelenkhebelstruktur 21 auf die statische Flugzeugstruktur 10 übertragen werden.

Die fünfte Ausführungsform, die in Figur 6 dargestellt ist, stellt eine Abwandlung der vierten Ausführungsform dar. Auch hier erfolgt die Verschwenkung der Antriebsvorrichtung 1 über eine Gelenkhebelstruktur 21 mit zwei Gelenkhebelelementen 21', 21". Allerdings greift das Verstellelement 23 des Aktuators 12 nicht am Verbindungsgelenk 22, sondern am axial hinten liegenden Ende der Gelenkhebelstruktur 21 an. Dabei ist der Aktuator 12 so ausgerichtet, dass das Verstellelement 23 nur eine Bewegung in axialer Richtung (vorne - hinten) bewirken kann. Die Gelenkhebelelemente 21`, 21" sind an der Flugzeugstruktur 10 geführt.

Der Aktuator 12 ist hier fest mit der Flugzeugstruktur 10 verbunden. Wenn Verstellelement 23 axial nach vorne geschoben wird, dann wird die Strebenstruktur 3 im Uhrzeigersinn um die Schwenkachse S verkippt, d.h. in die Vertikale. Eine Bewegung der Verschwenkvorrichtung 23 axial nach hinten führt zu einer entgegengesetzten Rotationsbewegung.

### Bezugszeichenliste

- 1: Antriebsvorrichtung
- 2: elektrischer Antrieb verschwenkbar
- 3: Strebenstruktur
- 4: Kühllufteinlauf
- 5: Kühlluftkanal
- 6: Umrichtereinheit
- 7: Wärmeaustauschfläche

- 10: Flugzeugstruktur
- 11: Verschwenkvorrichtung
- 12: Aktuator
- 13: Pylonstruktur
- 14: Motorstruktur
- 15: Antriebswelle für Propeller
- 16: Verbindungsmittel elektrischer Antrieb - Antriebswelle
- 17: Stützstruktur
- 18: erste Lagervorrichtung
- 19: zweite Lagervorrichtung
- 20: dritte Lagervorrichtung
- 21: Gelenkhebelvorrichtung
- 21': erstes Hebelelement
- 21": zweites Hebelelement
- 22: Verbindungsgelenk
- 23: Verstellelement

- A: Anlenkungsvorrichtung der Verschwenkvorrichtung
- F: horizontale Flugrichtung
- G: Vertikalflugrichtung
- M: axiale Mittelebene
- S: Schwenkachse des elektrischen Antriebs
- V: Versatz der Anlenkungsvorrichtung in horizontaler Richtung

## Patentansprüche

1. Antriebsvorrichtung (1) mit einem elektrischen Antrieb (2), die mit einer Flugzeugstruktur (10) eines Senkrecht-Start- und -Landungsluftfahrzeugs verbunden ist,
**gekennzeichnet durch**
eine Strebenvorrichtung (3), die den elektrischen Antrieb (2) mit der Flugzeugstruktur (10) verbindet und der elektrische Antrieb (2) mittels einer Verschwenkvorrichtung (11) um eine Schwenkachse (S) relativ zur Flugzeugstruktur (10) verschwenkbar ausgebildet ist und mindestens eine Anlenkungsvorrichtung (A) der Verschwenkvorrichtung (11) an der Flugzeugstruktur (10) angeordnet ist.

2. Antriebsvorrichtung (1) nach Anspruch 1, **dadurch gekennzeichnet, dass** die mindestens eine Anlenkungsvorrichtung (A) oberhalb einer axialen, horizontalen Mittelebene (M) der Antriebsvorrichtung (1) angeordnet ist.

3. Antriebsvorrichtung (1) nach Anspruch 1 oder 2, **dadurch gekennzeichnet, dass** die mindestens eine Anlenkungsvorrichtung (A) in horizontaler Flugrichtung (F) einen Versatz (V) gegenüber dem elektrischen Antrieb (2) nach hinten aufweist, wobei der Versatz (V) mindestens einem Durchmesser der Strebenstruktur (3) entspricht.

4. Antriebsvorrichtung (1) nach mindestens einem der vorhergehenden Ansprüche, **dadurch gekennzeichnet, dass** mindestens ein Kühlluftkanal (5) Kühlluft zur Rückseite des elektrischen Antriebs (1) führt.

5. Antriebsvorrichtung (1) nach mindestens einem der vorhergehenden Ansprüche, **dadurch gekennzeichnet, dass** an der Strebenstruktur (3) mindestens eine elektrische Umrichtereinheit (6) angeordnet ist, insbesondere mit einer Wärmeaustauschfläche (7) zu dem mindestens einem Kühlluftkanal (5).

6. Antriebsvorrichtung (1) nach mindestens einem der vorhergehenden Ansprüche **dadurch gekennzeichnet, dass** die Schwenkachse (S) für den mindestens einen Teil der Strebenstruktur (3) durch zwei Punkte der Flugzeugstruktur (10) geht.

7. Antriebsvorrichtung (1) nach mindestes einem der vorhergehenden Ansprüche **dadurch gekennzeichnet, dass** die Schwenkachse (S) im Inneren eines Flugzeugteils liegt, insbesondere in der axialen, horizontalen Mittelebene (M) der Antriebsvorrichtung (1).

8. Antriebsvorrichtung (1) nach mindestens einem der vorhergehenden Ansprüche, **dadurch gekennzeichnet, dass** die Strebenstruktur (3) zum Verschwenken mit einem Aktuator (12) der Verschwenkvorrichtung (11), insbesondere einem hydraulischen, einem elektrischen oder einem pneumatischen Aktuator (12), gekoppelt ist

9. Antriebsvorrichtung (1) nach mindestens einem der vorhergehenden Ansprüche, **dadurch gekennzeichnet, dass** die Verschwenkvorrichtung (11) über eine Gelenkhebelvorrichtung (21) mit der Strebenstruktur (3) verbunden ist.

10. Antriebsvorrichtung (1) nach mindestens einem der vorhergehenden Ansprüche, **dadurch gekennzeichnet, dass** die Strebenstruktur (3) mittels der Verschwenkvorrichtung (11) zwischen einer Stellung für eine horizontale Flugrichtung (F) und einer Stellung für eine Vertikalflugrichtung (G) verschwenkbar ist.

11. Antriebsvorrichtung (1) nach mindestens einem der vorhergehenden Ansprüche, **dadurch gekennzeichnet, dass** der elektrische Antrieb (2) als Transversalflussmaschine ausgebildet ist oder eine Transversalflussmaschine aufweist.

12. Senkrecht-Start- und -Landungsluftfahrzeug, gekoppelt mit mindestens einer Antriebsvorrichtung (1), nach mindestens einem der Ansprüche 1 bis 11.
